# EUROPEAN PATENT APPLICATION

(11) **EP 4 509 541 A1**
(43) Date of publication of application: **19.02.2025**
(21) Application number: 23191868.1
(22) Date of filing: 17.08.2023
(51) Int. Cl.: C08G 18/67, C08F 290/06, C08G 18/10, C08G 18/22, C08G 18/28, C08G 18/48, C08G 18/75, C09D 175/16

(54) **THERMO-CURABLE RESIN COMPOSITION**

(71) Applicant: Allnex Belgium, S.A., 1620 Drogenbos (BE)
(72) Inventor: CAPPELLE, Steven, 9400 Ninove (BE); EHRHARDT, Dorothee, 1620 Drogenbos (BE); POTZMANN, Robert, 1000 Brussels (BE)
(74) Representative: Allnex Belgium S.A.

(57) **Abstract**

A thermo-curable resin composition (X) comprising an oligomeric ethylenically unsaturated resin (UR) and at least one reactive diluent (RD), wherein the oligomeric ethylenically unsaturated resin (UR) comprises at least one polyether-functional urethane (meth)acrylate (A) obtainable from the reaction of a mixture comprising: (a) a multifunctional isocyanate (**I**); (b) a hydroxyalkyl (meth)acrylate (HAA), and/or an unbranched C2-C4 polyalkylene glycol (meth)acrylate (AGA); (c) optionally, a polyol having a weight average molecular weight of 200 to 4000 g/mol, wherein the polyol is a polyether polyol (**PEP**) of an unbranched C2-C4 polyalkylene glycol; and (d) optionally, a polyol (**PO**) different from (c); wherein the reactive diluent (**RD**) comprises a monomer (**B**) having at least one (meth)acrylate group, and wherein the at least one polyether-functional urethane (meth)acrylate (**A**) comprises at least one unbranched moiety according to formula 1, 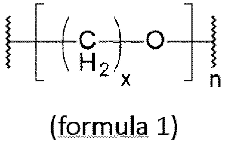 wherein x is an integer from 2 to 4, n is an integer from 2 to 90, and wherein the at least one unbranched moiety according to formula 1 derives from (b) and/or (c).

## Description

### FIELD OF THE INVENTION

The present invention generally relates to a thermo-curable resin composition as well as a coating composition comprising said thermo-curable resin composition and the use of said thermo-curable resin composition to obtain a tack-free cured coating layer. The invention further relates to a method for obtaining a tack-free cured coating layer and an article of manufacture comprising a tack-free cured coating layer on its surface.

### BACKGROUND OF THE INVENTION

Light-weight composites are commonly used in manufacturing many items, especially substrates comprising fiber reinforced composites. To obtain a reasonable surface appearance, a coating composition, often named as "gel coat", is applied over a supporting substrate comprising fibers. Parts can be produced to have a finish bearing any desired color originally carried by said coating composition. It is distinguished in the art between coating compositions that are thermo-curable and coating compositions that cure by exposure to actinic radiation (radiation curable compositions).

WO 2020/260608 describes a radiation curable gel coat composition for fibers reinforced substrates which comprises a gel coat resin and a diluent monomer, wherein the gel coat resin comprises urethane (meth)acrylate is made from a polycaprolactone polyol or a [(poly)carbonate-(poly)caprolactone]polyol.

Radiation curable compositions are not practical for many types of applications. This is e.g. because of extra equipment for the radiation curing is required.

In WO 2010/073003 a gelcoat is provided which comprises unsaturated urethane resins containing both acrylate and allyl ether functional groups, however, this gelcoat is diluted with styrene and styrene based compounds.

Since the commercial inception of such thermo-curable resins, styrene has been a primary reactive diluent due to its low cost, availability, ease of use and resulting excellent mechanical properties. However, in recent years, government regulations have restricted styrene emissions in open molding facilities due to harmful environmental and health effects. Therefor the use of styrene should be avoided. Several compositions with alternative reactive diluents have been described in the art, however, low volatile acrylate and methacrylate monomers have been inadequate as replacements for styrene since atmospheric oxygen severely retards polymerization, resulting in an under-cured "tacky" surface.

### AIM OF THE INVENTION

It is accordingly an object of the invention, to provide a thermo-curable resin composition that overcomes at least partially the above described drawbacks. Further it is an object of present invention to provide a thermo-curable resin compositions that cures tack-free at high temperature or at room temperature. Another object of the invention is to provide a thermo-curable resin composition that after curing provides a good abrasion resistance. In still another object the composition provides low volatiles and a low odor. A further object of the invention is to provide cured coating layers that maintain color and high gloss when exposed to outdoor circumstances. These objects are met, at least partially by a thermo-curable resin composition according to claim 1.

### SUMMARY OF THE INVENTION

The first aspect of the present invention refers to a thermo-curable resin composition (**X**) comprising an oligomeric ethylenically unsaturated resin (**UR**) and at least one reactive diluent (**RD**),
wherein the oligomeric ethylenically unsaturated resin (**UR**) comprises at least one polyether-functional urethane (meth)acrylate (**A**) obtainable from the reaction of a mixture comprising:
   (a) a multifunctional isocyanate (**I**);
   (b) a hydroxyalkyl (meth)acrylate (**HAA**), and/or an unbranched C2-C4 polyalkylene glycol (meth)acrylate (**AGA**);
   (c) optionally , a polyol having a weight average molecular weight of 200 to 4000 g/mol, wherein the polyol is a polyether polyol (**PEP**) of an unbranched C2-C4 polyalkylene glycol; and
   (d) optionally, a polyol (**PO**) different from (c);
wherein the reactive diluent (**RD**) comprises a monomer (**B**) having at least one (meth)acrylate group,
and wherein the at least one polyether-functional urethane (meth)acrylate (**A**) comprises at least one unbranched moiety according to formula 1, 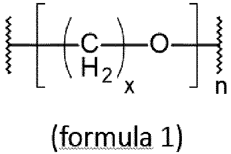
wherein x is an integer from 2 to 4, preferably from 2 to 3 , n is an integer from 2 to 90, preferably from 2 to 50, most preferably from 3 to 30, and wherein the at least one unbranched moiety according to formula 1 derives from (b) and/or (c).

It is surprisingly found that, due to the presence of urethane (meth)acrylate comprising unbranched polyalkylene glycol moiety, such thermo-curable resin composition exhibits good room temperature as well as high temperature dryability. As a consequence short backup time can be realized, meaning that if the composition is used as a gel coat for the manufacture of fiber reinforced articles there is only short delay between gel coat application and the consecutive laminating step. Furthermore it was found that the thermo-curable resin compositions according to the invention provide a short time to peak temperature, low volatiles and a low odor at low dynamic viscosity. The cured coating layers comprised of the thermo-curable resin compositions according to the invention exhibit good abrasion resistance as well as good stability of color and gloss when exposed to outdoor circumstances. Quantification methods for dryability, backup time, time to peak temperature, dynamic viscosity, odor and abrasion resistance are provided with the experimental section.

It is especially surprising that a combination of above mentioned effects can be obtained as well as that these effects can be obtained by a resin that is substantially free of styrene or styrene derivatives.

The present invention also relates, in a second aspect, to a coating composition (**Z**) comprising the thermo-curable resin composition (**X**) according to any embodiment of the first aspect.

In a third aspect, the present invention relates to a method for obtaining a tack-free cured coating layer comprising the steps of
i. adding to a coating composition (**Z**) according to any embodiment of the second aspect a free-radical initiator (**RI**) selected from the group consisting of peroxides, azo-compounds and mixtures thereof,
ii. applying the coating composition from step (i) onto a substrate to form a wet film, and
iii. optionally, applying a temperature of between 40 and 140 °C, preferably between 60 and 130 °C, most preferably between 80 and 120 °C, for up to 240 minutes, preferably up to 120 minutes, more preferably up to 60 minutes.

The present invention also relates, in a fourth aspect, to a use of thermo-curable resin composition (**X**) according to any embodiment of the first aspect to obtain a tack-free cured coating layer after adding a free-radical initiator (**RI**) selected from the group consisting of peroxides, azo-compounds and mixtures thereof.

In a fifth aspect, the present invention relates to an article of manufacture comprising a tack-free cured coating layer on its surface, prepared by curing a coating composition (**Z**) according to any embodiment of the second aspect by a method according to an embodiment of the third aspect.

### DETAILED DESCRIPTION OF THE INVENTION

The first aspect of the present invention relates to a thermo-curable resin composition (**X**) comprising an oligomeric ethylenically unsaturated resin (**UR**) and at least one reactive diluent (**RD**),
wherein the oligomeric ethylenically unsaturated resin (**UR**) comprises at least one polyether-functional urethane (meth)acrylate (**A**) obtainable from the reaction of a (reaction) mixture comprising:
   (a) a multifunctional isocyanate (**I**);
   (b) a hydroxyalkyl (meth)acrylate (**HAA**), and/or an unbranched C2-C4 polyalkylene glycol (meth)acrylate (**AGA**);
   (c) optionally, a polyol having a weight average molecular weight of 200 to 4000 g/mol, wherein the polyol is a polyether polyol (**PEP**) of an unbranched C2-C4 polyalkylene glycol; and
   (d) optionally, a polyol (**PO**) different from (c);
wherein the reactive diluent (**RD**) comprises a monomer (**B**) having at least one (meth)acrylate group,
and wherein the at least one polyether-functional urethane (meth)acrylate (**A**) comprises at least one unbranched moiety according to formula 1, 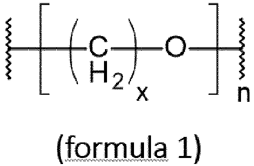
wherein x is an integer from 2 to 4, preferably from 2 to 3, n is an integer from 2 to 90, preferably from 2 to 50, most preferably from 3 to 30, and wherein the at least one unbranched moiety according to formula 1 derives from (b) and/or (c).

If (b) is a hydroxyalkyl (meth)acrylate (**HAA**), a polyether polyol (**PEP**) of an unbranched C2-C4 polyalkylene glycol is comprised in the reaction mixture to obtain the oligomeric ethylenically unsaturated resin (**UR**). If (b) is an unbranched C2-C4 polyalkylene glycol (meth)acrylate (**AGA**), a polyether polyol (**PEP**) of an unbranched C2-C4 polyalkylene glycol may or may not be comprised in the reaction mixture to obtain the oligomeric ethylenically unsaturated resin (**UR**).

Thermo-curable resin composition is meant to designate in the present invention a resin composition that hardens or cures by means of radical copolymerization induced by free-radical initiators that generate radicals upon exposure to heat.

The prefix "(meth)acryl" when used to name compounds in the present description encompasses both "acryl" and "methacryl" and refers to compounds comprising at least one CH2=CHCOO- group or CH2=CCH3COO- group, as well as mixtures thereof and mixtures of such compounds.

Urethane (meth)acrylates are well known in the art and commercially available products.

Urethane (meth)acrylate is meant to designate in the present invention a compound containing at least one carbamate group corresponding to formula 2 and at least one (meth)acrylate group corresponding to formula 3 wherein R is an hydrogen atom or a methyl group.

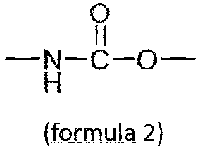

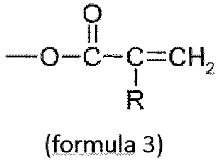

By polyether-functional urethane (meth)acrylate (**A**) is meant to designate in the present invention a urethane (meth)acrylate comprising at least one unbranched moiety according to formula 1.

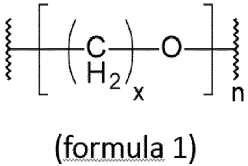

Preferably, the (reaction) mixture to obtain polyether-functional urethane (meth)acrylate (**A**) comprises
(a) from 10 to 45, more preferably from 12 to 40, most preferably from 15 to 35 % weight of a multifunctional isocyanate (**I**);
(b-1) from 5 to 40, more preferably from 8 to 35, most preferably from 10 to 30 % weight of a hydroxyalkyl (meth)acrylate (**HAA**),
(c) from 25 to 80, more preferably from 30 to 75, most preferably from 35 to 70 % weight of a polyol having a weight average molecular weight of 200 to 4000 g/mol, wherein the polyol is a polyether polyol (**PEP**) of an unbranched C2-C4 polyalkylene glycol; and
(d) optionally, from 1 to 35, more preferably from 1 to 30, most preferably from 1 to 25 % weight of a polyol (**PO**) different from (c);
wherein the sum of **I, HAA, PEP** and (optional) **PO** is 100 %.

Alternatively, if additionally an unbranched C2-C4 polyalkylene glycol (meth)acrylate (**AGA**) is present, the (reaction) mixture to obtain polyether-functional urethane (meth)acrylate (**A**) preferably comprises
(a) from 10 to 45, more preferably from 12 to 40, most preferably from 15 to 35 % weight of a multifunctional isocyanate (**I**);
(b-1) from 2 to 40, more preferably from 5 to 35, most preferably from 7 to 30 % weight of a hydroxyalkyl (meth)acrylate (**HAA**),
(b-2) from 5 to 75, more preferably from 10 to 70, most preferably from 15 to 65 % weight of an unbranched C2-C4 polyalkylene glycol (meth)acrylate (**AGA**);
(c) from 10 to 70, more preferably from 15 to 55, most preferably from 20 to 50 % weight of a polyol having a weight average molecular weight of 200 to 4000 g/mol, wherein the polyol is a polyether polyol (**PEP**) of an unbranched C2-C4 polyalkylene glycol; and
(d) optionally, from 1 to 35, more preferably from 1 to 30, most preferably from 1 to 25 % weight of a polyol (**PO**) different from (c);
wherein the sum of **I, HAA, AGA, PEP** and (optional) **PO** is 100 %.

Alternatively, the (reaction) mixture to obtain polyether-functional urethane (meth)acrylate (**A**) preferably comprises
(a) from 10 to 45, more preferably from 12 to 40, most preferably from 15 to 35 % weight of a multifunctional isocyanate (**I**);
(b-2) from 15 to 80, more preferably from 20 to 75, most preferably from 25 to 70 % weight of an unbranched C2-C4 polyalkylene glycol (meth)acrylate (**AGA**);
(c) from 10 to 75, more preferably from 15 to 70, most preferably from 20 to 65 % weight of a polyol having a weight average molecular weight of 200 to 4000 g/mol, wherein the polyol is a polyether polyol (**PEP**) of an unbranched C2-C4 polyalkylene glycol; and
(d) optionally, from 1 to 35, more preferably from 1 to 30, most preferably from 1 to 25 % weight of a polyol (**PO**) different from (c);
wherein the sum of **I, AGA, PEP** and (optional) **PO** is100 %.

Further preferably, the (reaction) mixture to obtain polyether-functional urethane (meth)acrylate (**A**) comprises
(a) from 10 to 50, more preferably from 12 to 40, most preferably from 15 to 35 % weight of a multifunctional isocyanate (**I**); and
(b-2) from 40 to 90, more preferably from 45 to 85, most preferably from 50 to 80 % weight of an unbranched C2-C4 polyalkylene glycol (meth)acrylate (**AGA**);
the sum of **I** and **AGA** being 100 %.

Alternatively, if additionally a hydroxyalkyl (meth)acrylate (**HAA**) is present, the (reaction) mixture to obtain polyether-functional urethane (meth)acrylate (**A**) preferably comprises
(a) from 10 to 50, more preferably from 12 to 40, most preferably from 15 to 35 % weight of a multifunctional isocyanate (**I**);
(b-1) from 5 to 55, more preferably from 8 to 50, most preferably from 10 to 45 % weight of a hydroxyalkyl (meth)acrylate (**HAA**),
(b-2) from 20 to 75, more preferably from 25 to 70, most preferably from 30 to 65 % weight of an unbranched C2-C4 polyalkylene glycol (meth)acrylate (**AGA**);
wherein the sum of **I, HAA** and **AGA** is 100 %.

Alternatively, the (reaction) mixture to obtain polyether-functional urethane (meth)acrylate (**A**) preferably comprises
(a) from 10 to 45, more preferably from 12 to 40, most preferably from 15 to 35 % weight of a multifunctional isocyanate (**I**);
(b-2) from 5 to 75, more preferably from 10 to 70, most preferably from 15 to 65 % weight of an unbranched C2-C4 polyalkylene glycol (meth)acrylate (**AGA**); and (d) from 10 to 70, more preferably from 15 to 55, most preferably from 20 to 50 % weight of a polyol (**PO**) different from polyether polyol (**PEP**);
wherein the sum of **I, AGA** and **PO** is 100 %.

The multifunctional isocyanate (**I**) is preferably selected from the group consisting of aromatic or aliphatic or mixed aliphatic-aromatic isocyanates. The multifunctional isocyanate (**I**) comprises at least two, preferably two isocyanate groups per molecule. More preferably the multifunctional isocyanate (**I**) is selected from the group consisting of trimethylene diisocyanate, tetramethylene diisocyanate, pentamethylene diisocyanate, hexamethylene diisocyanate (HDI), propylene diisocyanate, ethylethylene diisocyanate, 2,3-dimethylethylenediisocyanate, 1-methyltrimethylene diisocyanate, cyclopentylene 1,3-diisocyanate, cyclohexylene 1,4-diisocyanate, cyclohexylene 1,2-diisocyanate, phenylene 1,3-diisocyanate, phenylene 1,4-diisocyanate, 2,4-toluene diisocyanate, 2,6-toluene diisocyanate, biphenylene 4,4'-diisocyanate, bis-(4-isocyanatophenyl)methane (MDI), naphthylene 1,5-diisocyanate, naphthylene 1,4-diisocyanate, 1-isocyanatomethyl-5-isocyanato-1,3,3-tri-methylcyclohexane (isophorone diisocyanate, IPDI), bis-(4-isocyanatocyclohexyl)methane (H12-MDI), 4,4'-diiso-cyanato-diphenyl ether, 2,3-bis-(8-isocyanatooctyl)-4-octyl-5-hexylcyclohexene, trimethylhexamethylene diisocyanates, 1,3-bis(2-isocyanatopropan-2-yl)benzene, meta-tetramethylxylylene diisocyanate (TMXDI), uretdiones of the above diisocyanates, isocyanurates of the above diisocyanates, and allophanates of the above diisocyanates, and mixtures thereof.

In case multifunctional isocyanate (**I**) with more than two isocyanate groups per molecule is used, a branched urethane (meth)acrylate is formed.

Most preferably multifunctional isocyanate (**I**) is selected from the group consisting of aliphatic isocyanates, and is even most preferably selected from the group consisting of hexamethylene diisocyanate (HDI) and its uretdiones, isocyanurates or allophanates, bis-(4-isocyanatocyclohexyl)methane (H12-MDI), 1-isocyanatomethyl-5-isocyanato-1,3,3-trimethylcyclohexane (isophorone diisocyanate, IPDI), and mixtures thereof.

The multifunctional isocyanate (**I**) can be obtained from petrochemical feedstock.

Alternatively and preferred, where possible, the multifunctional isocyanate (**I**) is obtained from renewable feedstock. Particularly preferred is isophorone diisocyanate (1-isocyanatomethyl-5-isocyanato-1,3,3-tri-methylcyclohexane (IPDI)) obtained from bio-based acetone. Other preferred multifunctional isocyanates (**I**) derived in part from renewable feedstocks are for example 1,5-pentamethylene diisocyanate, diisocyanates of the methyl or ethyl esters of L-lysine, isosorbide-based diisocyanates, furan based diisocyanate, bis(4-isocyanato-2-methoxyphenoxy) alkane, bis(4-isocyanato- 2,6-dimethoxyphenoxy)alkane, 2,4-diisocyanato-1-pentadecylbenzene, di- and polyisocyanates based on fatty acids, dimer fatty acids and vegetable oils, 1- isocyanato-10-[(isocyanatomethyl)thio]decane and a product known under the tradename TOLONATE^{™} X FLO 100.

In yet another alternative, the multifunctional isocyanate (**I**) is obtained from petrochemical feedstock and/or renewable feedstock.

In the context of the present description, "renewable feedstock" refers to natural resources which will replenish to replace the portion depleted by usage and consumption, either through natural reproduction or other recurring processes (in a finite amount of time in a human time scale). Substances or mixtures of substances obtained from such renewable feedstock should have in total a bio-based carbon content of more than 20% by weight of total carbon content of the substance or mixture, the bio-carbon content being determined using the ASTM D6866-20 standard.

The hydroxyalkyl (meth)acrylate (**HAA**) is in general a hydroxyl functional (meth)acrylate and more in particular a '(meth)acryloyl mono-hydroxy' compound, whereby '(meth)acryloyl mono-hydroxy' compound is meant to designate compounds comprising one hydroxyl group and one or more (meth)acryloyl groups. Acrylates are particularly preferred. Typically hydroxyalkyl (meth)acrylate (**HAA**) are different from unbranched C2-C4 polyalkylene glycol (meth)acrylate (**AGA**).

Examples of suitable hydroxyalkyl (meth)acrylate (**HAA**) include but are not limited to hydroxyethyl (meth)acrylate, hydroxypropyl (meth)acrylate, hydroxybutyl (meth)acrylate, polypropyleneoxide mono(meth)acrylate, or any of those hydroxylated monomers further reacted with lactones or lactides which add to these hydroxyls in a ring-opening reaction.

Also suitable hydroxyalkyl (meth)acrylates (**HAA**) are the esterification products of aliphatic and/or aromatic polyols with (meth)acrylic acid having a residual average hydroxyl functionality of about 1. The partial esterification products of (meth)acrylic acid with tri-, tetra-, penta- or hexahydric aliphatic polyols or mixtures are preferred. It is also possible to use reaction products of such polyols with propylene oxide or the reaction products of such polyols with lactones or lactides which add to these polyols in a ring-opening reaction until the desired residual hydroxyl functionality is reached. It is known to those skilled in the art that the (meth)acrylation of polyols proceeds to a mixture of (meth)acrylate components and that an easy and suitable way to characterize the mixture is by measuring its hydroxyl value (mg KOH/g). Suitable compounds (HAA) are for instance the (meth)acrylic esters of linear and branched polyols in which at least one hydroxy functionality remains free. Examples of suitable compounds include but are not limited to glycerol diacrylate, trimethylolpropane diacrylate, pentaerythritol triacrylate, ditrimethylolpropane triacrylate, dipentaerythritol pentaacrylate and (poly)propoxylated equivalents.

Most preferably the hydroxyalkyl (meth)acrylate (**HAA**) is selected from the group consisting of 2-hydroxyethyl methacrylate, 2-hydroxyethyl acrylate, 2-hydroxypropyl methacrylate, 2-hydroxypropyl acrylate, and mixtures thereof.

The unbranched C2-C4 polyalkylene glycol (meth)acrylate (**AGA**) preferably relates to the general structure (formula 4): 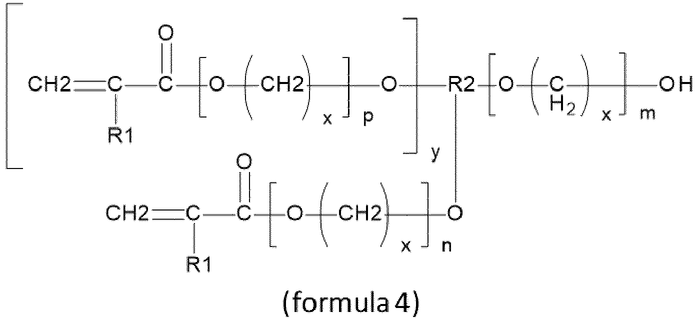 wherein R¹ is hydrogen or methyl, R² is a linear or branched C2-C6 aliphatic radical, x is an integer from 2 to 4, preferably from 2 to 3, y is an integer from 0 to 2, m is an integer from 0 to 12, p is an integer from 0 to 12, preferably from 0 to 10 and more preferably from 0 to 8 and n is an integer from 2 to 12, preferably from 2 to 10 and more preferably from 2 to 8.

Examples of suitable unbranched C2-C4 polyalkylene glycol (meth)acrylate (**AGA**) include poly(ethoxylated) derivatives of hydroxy alkyl (meth)acrylates, trimethylolpropane di(meth)acrylates, glycerol di(meth)acrylates, pentaerythritol tri(meth)acrylate or mixtures thereof.

The unbranched C2-C4 polyalkylene glycol (meth)acrylate (**AGA**) more preferably is alkoxylated (meth)acrylic acid with the general structure (formula 5): 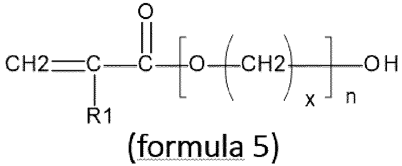 wherein R¹ is hydrogen or methyl, x is an integer from 2 to 4, preferably from 2 to 3, and n is an integer from 2 to 12, preferably from 2 to 10 and more preferably from 2 to 8. Most preferably the unbranched C2-C4 polyalkylene glycol (meth)acrylate (**AGA**) is a polyethylene glycol mono(meth)acrylate comprising from 2 to 12 ethylene oxide (EO) units.

The polyether polyol (**PEP**) of an unbranched C2-C4 polyalkylene glycol preferably is a poly(oxyalkylene) glycol comprising unbranched alkyl radicals containing from 2 to 4 carbon atoms, more preferably the polyether polyol (**PEP**) of an unbranched C2-C4 polyalkylene glycol is selected from the group consisting of poly(oxyethylene)glycol, poly(oxypropylene)glycol, poly(oxytetramethylene)glycol and mixtures thereof.

The polyether polyol (**PEP**) of an unbranched C2-C4 polyalkylene glycol includes products obtained by the polymerisation of a cyclic oxide, for example ethylene oxide, trimethylene oxide, or tetrahydrofuran or by the addition of one or more such oxides to polyfunctional initiators, for example water, ethylene glycol, propylene glycol, diethylene glycol, cyclohexane dimethanol, glycerol, trimethylolpropane, pentaerythritol or Bisphenol A. Especially useful polyethers include polyoxyethylene diols and triols, poly (oxyethylene-oxypropylene) diols and triols obtained by the simultaneous or sequential addition of ethylene and propylene oxides to appropriate initiators and polytetramethylene ether glycols obtained by the polymerisation of tetrahydrofuran. Amine-terminated polyetherpolyols may also be used.

Most preferably the polyether polyol (**PEP**) of an unbranched C2-C4 polyalkylene glycol are selected from the group consisting of poly(oxyethylene)glycol, 1,3-poly-propanediol, poly (oxytetramethylene)glycol and mixtures thereof.

The weight average molecular weight of the polyether polyol (**PEP**) of an unbranched C2-C4 polyalkylene glycol preferably is from 200 to 4000 g/mol, more preferably from 500 to 2000 g/mol.

Alternatively and preferred, where possible, the polyether polyol (**PEP**) of an unbranched C2-C4 polyalkylene glycol is poly(oxyalkylene) glycol obtained from renewable feedstock, more preferably poly(oxyalkylene) glycol obtained from bio-based 1,3-propandiol.

In yet another alternative, the polyether polyol (**PEP**) of an unbranched C2-C4 polyalkylene glycol is obtained from petrochemical feedstock and/or renewable feedstock.

Preferably, the % weight of unbranched moiety according to formula 1 deriving from unbranched C2-C4 polyalkylene glycol (meth)acrylate (**AGA**) and/or from polyether polyol (**PEP**) is from 5 to 70 % , more preferably from 10 to 60 % based on the total weight of the thermo-curable resin composition (**X**).

In another preferred embodiment, the unbranched moiety according to formula 1 derives from unbranched C2-C4 polyalkylene glycol (meth)acrylate (**AGA**) and the % weight of unbranched moiety according to formula 1 is from 5 to 70 % , more preferably from 10 to 60 % based on the total weight of the thermo-curable resin composition (**X**).

In a further preferred embodiment, the unbranched moiety according to formula 1 derives from polyether polyol (**PEP**) and the % weight of unbranched moiety according to formula 1 is from 5 to 70 % , more preferably from 10 to 60 % based on the total weight of the thermo-curable resin composition (**X**).

In still another preferred embodiment, the unbranched moiety according to formula 1 derives from unbranched C2-C4 polyalkylene glycol (meth)acrylate (**AGA**) and from polyether polyol (**PEP**) and the % weight of unbranched moiety according to formula 1 is from 5 to 80 % , more preferably from 7 to 70 %, most preferably from 10 to 60 % based on the total weight of the thermo-curable resin composition (**X**).

Preferably, the polyol (**PO**) is selected from the group consisting of monomeric polyols, polymeric polyols or mixtures thereof. On average, the number of hydroxy groups per molecule of polyol (**PO**) is 2 or more, preferably from 2 to 4, more preferably 2. Preferably, the monomeric polyols are diols. Said diols are preferably selected from the group consisting of 1,2-ethanediol, 1,2- and 1,3-propanediol, diethylene glycole, triethylene glycole, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclo- hexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosane diol, isosorbide, isomannide, isoidide and mixture thereof.

The polymeric polyols are preferably selected from the group consisting of polyester polyols, polycarbonate polyols, branched C2-C4 polyalkylene glycols comprising branched alkyl radicals, and mixtures thereof. The weight average molecular weight of the polymeric polyols preferably is from 200 to 4000 g/mol.

Suitable polyester polyols have at least two hydroxyl groups, more preferably have two hydroxyl groups, and are prepared from stoichiometric excess of one or more diols and one or more diacids,
- said diols being preferably selected from the group consisting of 1,2-ethanediol, 1,2- and 1,3-propanediol, diethylene glycole, triethylene glycole, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclo- hexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosane diol, isosorbide, isomanide, isoidide and mixture thereof;
- said diacids being preferably selected from the group consisting of malonic acid, succinic acid, glutaric acid, adipic acid, octanedioic acid, and also dimeric fatty acids having up to forty carbon atoms, isophthalic acid, terephthalic acid, naphthalene dicarboxylic acids and mixtures thereof.

Optionally one or more hydroxy-carboxylic acids, such as for example hydroxybenzoic acid, lactic acid, gamma-hydroxybutyric acid, delta-hydroxyvaleric acid, and epsilon-hydroxycaproic acid, in combination with one or more diols may be used for the preparation of the polyester polyols.

Preferably the polyester polyols are the condensation product of diacids selected from the group consisting of adipic acid, isophthalic acid and mixtures thereof and a stoichiometric excess of diols selected from the group consisting of 1,4 butanediol, 1,6-hexanediol, 2,2'-oxydi(ethan-1-ol), 2,2-dimethyl-1,3-propanediol and mixtures thereof, said polyesters being characterized by a hydroxyl number comprised between 20 and 400 mg KOH/g, preferably between 30 and 250 mg KOH/g, more preferably between 40 and 150 mg KOH/g and an acid number of less than 3 mg KOH/g, preferably less than 2 mg KOH/g, more preferably less than 1 mg KOH/g said acid number being residual and generated by end-standing unreacted acid functionalities.

Alternatively and preferred, where possible, said diols (e.g. 1,3-propanediol), diacids (e.g. succinic acid) or hydroxy-carboxylic acid(s) (e.g. lactic acid) used for the preparation of the polyester polyols, are obtained from renewable feedstock.

In yet another alternative, the polyester polyols are obtained from petrochemical feedstock and/or renewable feedstock.

By polyester polyols having two hydroxyl groups the present invention should be understood as a polyester having almost two hydroxyl groups and a negligible amount of carboxylic acid groups, since a 100% conversion is hardly to achieve.

Suitable polycarbonate polyols are compounds having at least two hydroxyl groups and are prepared by reaction of polyols, such as 1,3-propanediol, 1,4-butanediol, 1,6-hexanediol, diethylene glycol, triethylene glycol, 1,4-bishydroxymethylcyclohexane, 2,2-bis(4-hydroxycyclohexyl) propane, neopentylglycol, trimethylolpropane or pentaerythritol, with di-carbonates, such as dimethyl, diethyl or diphenyl carbonate, or phosgene.

Alternatively and preferred, where possible, the polycarbonate polyols are obtained from renewable feedstock, more preferably from bio-based polyols (e.g. bio-based 1,3-propanediol or 1,5-pentanediol).

In yet another alternative, the polycarbonate polyols are obtained from petrochemical feedstock and/or renewable feedstock.

Suitable branched C2-C4 polyalkylene glycols are poly-1,2-propylene glycols having at least two hydroxyl groups, more preferably having two hydroxyl groups.

Preferably, the (reaction) mixture to obtain polyether-functional urethane (meth)acrylate (**A**) does not comprise polyol (**PO**).

Preferably the polyether-functional urethane (meth)acrylate (**A**) used in the present invention comprises at least two (meth)acrylate groups and preferably at most six, more preferably at most four (meth)acrylate groups.

Polyether-functional urethane (meth)acrylate (**A**) as used in the present invention more preferably comprise two or three (meth)acrylate groups, more in particular two or three acrylate groups. Particularly suited polyether-functional urethane (meth)acrylate (**A**) are selected from the group of urethane di(meth)acrylates, even more preferred selected from the group of urethane diacrylates.

The reactive diluent (**RD**) serves as a solvent for the oligomeric ethylenically unsaturated resin (**UR**) to adjust the dynamic viscosity of the thermo-curable resin composition (**X**). Preferably, the dynamic viscosity, determined according to DIN EN ISO 3219 at a temperature of 23°C and a shear rate of 25 s⁻¹, of the thermo-curable resin composition (**X**) is between 250 and 10,000 mPa.s, more preferably between 300 and 5,000 mPa.s, most preferably between 400 and 3,000 mPa.s.

The % weight of oligomeric ethylenically unsaturated resin (**UR**) preferably is from 30 to 90, more preferably from 45 to 80, and the % weight of reactive diluent (**RD**) is from 10 to 70, more preferably form 20 to 55, based on the total weight of the thermo-curable resin composition (**X**). The weight ratio of oligomeric ethylenically unsaturated resin (**UR**) and reactive diluent (**RD**) preferably is from 0.25 to 20.00, more preferably from 0.40 to 10.00 and most preferably from 0.75 to 4.00.

The reactive diluent (**RD**) comprises a monomer (**B**) having at least one (meth)acrylate group. Preferably, the monomer (**B**) having at least one (meth)acrylate group is selected from the group consisting of monomer (**M1**) having one (meth)acrylate group and monomer (**M2**) having at least two (meth)acrylate groups.

Suitable monomer (**M1**) having one (meth)acrylate group can be selected from the group consisting of methacrylic acid, methyl methacrylate (MMA), ethylmethacrylate, n-butylmethacrylate (BuMA), tert-butyl methacrylate (tBuMA), cyclohexyl methacrylate (CHMA), glycidyl methacrylate, isobornyl methacrylate (IBOMA), (hydroxyethyl)methacrylate (HEMA), hydroxypropylmethacrylate (HPMA), acrylic acid, methyl acrylate (MA), ethyl acrylate (EA), n-butyl acrylate (BuA), tert-butyl acrylate (tBuA), 2-ethyl hexyl acrylate (2EHA), isooctyl acrylate (IOA), isobornyl acrylate (IBOA), isobornyl methacrylate (IBoMA), hydroxyethylacrylate (HEA), cyclic trimethylol formal acrylate (CTFA), vinylacetate (VoAc), benzyl methacrylate (BMA), ethylene glycol C2-C6 monoalkylether (meth)acrylates, propylene glycol C2-C6-monoalkylether (meth)acrylates and any mixtures thereof.

More preferably monomer (**M1**) having one (meth)acrylate group can be selected from the group consisting of methyl methacrylate (MMA), n-butyl methacrylate (BuMA), tert-butyl methacrylate (tBuMA), cyclohexyl methacrylate (CHMA), hydroxyethyl-methacrylate (HEMA), hydroxypropyl methacrylate (HPMA), isobornyl acrylate (IBOA), isobornyl methacrylate (IBoMA), benzyl methacrylate (BMA), diethylene glycol monomethylether acrylate, diethylene glycol monomethylether methacrylate, diethylene glycol monoethylether acrylate, diethylene glycol monoethylether methacrylate and any mixtures thereof.

Monomer (**M2**) having at least two (meth)acrylate groups can be selected from the group consisting of di and tri(meth)acrylated monomers such as 1,6-hexanediol di(meth)acrylate (HDD(M)A), di or tri propylene glycol di(meth)acrylate (DPGD(M)A, TPGD(M)A), di or tri ethylene glycol di(meth)acrylate (DEGD(M)A, TEGD(M)A), tetra propylene glycol di(meth)acrylate, tetra ethylene glycol di(meth)acrylate, tricylcodecane dimethanol di(meth)acrylate, neopentylglycol di(meth)acrylate and the ethoxylated and/or propoxylated derivates thereof, trimethylolpropanetri(meth)acrylate (TMPT(M)A) and the ethoxylated and/or propoxylated derivatives thereof, glycerol tri(meth)acrylate and the ethoxylated and/or propoxylated derivates thereof, pentaerythritoltri(meth)acrylate (PETI(M)A) and the ethoxylated and/or propoxylated derivatives thereof, glyceroltri(meth)acrylate and the ethoxylated and/or propoxylated derivatives thereof, dianhydrohexitols di(meth)acrylates (like isosorbide di(meth)acrylate) and the ethoxylated and/or propoxylated derivatives thereof, bisphenol A di(meth)acrylate and the ethoxylated and/or propoxylated derivatives thereof. Preferably, monomer (**M2**) having at least two (meth)acrylate groups is selected from the group consisting of 1,6-hexanediol di(meth)acrylate (HDD(M)A), di or tri ethylene glycol di(meth)acrylate (DEGD(M)A, TEGD(M)A), tetra ethylene glycol di(meth)acrylate and any mixtures thereof.

Preferably, the reactive diluent (**RD**) comprises more than 25.0 % weight of a monomer (**M2**) having at least two (meth)acrylate groups.

The reactive diluent (**RD**) may comprise vinyl monomer (**M3**). Vinyl monomer (**M3**) may be selected from the group consisting of styrene, methyl styrene, ethyl styrene, halogenated styrene, vinyl toluene and mixtures thereof. The % weight of monomer (**B**) having at least one (meth)acrylate group, comprised in reactive diluent (**RD**) preferably is more than 75, more preferably more than 85 and most preferably more than 95.

Most preferably, the thermo-curable resin composition (**X**) is substantially free of styrene, methyl styrene, ethyl styrene, halogenated styrene, vinyl toluene and methylmethacrylate. "Substentially free" in the context of this invention means that less than 1.0 % weight, preferably less than 0.5 % weight and most preferably less than 0.1 % weight (based on the entity it refers to) are comprised.

Urethane (meth)acrylates are well known in the art and have for example been described in GB-A-2217722. A method for obtaining a polyether-functional urethane (meth)acrylate (**A**) may comprise the steps of
- providing a multifunctional isocyanate (**I**), optionally in the presence of a reactive diluent (**RD**) which is chemically inert towards isocyanate;
- adding a hydroxyalkyl (meth)acrylate (**HAA**) and optionally an unbranched C2-C4 polyalkylene glycol (meth)acrylate (**AGA**) thereto, wherein the molar ratio between the sum of isocyanate groups deriving from multifunctional isocyanate (**I**) to the sum of hydroxyl groups deriving from hydroxyalkyl (meth)acrylate (**HAA**) and from optional unbranched C2-C4 polyalkylene glycol (meth)acrylate (**AGA**), is between 1.001 and 2.5;
- adding a polyether polyol (**PEP**) of an unbranched C2-C4 polyalkylene glycol and optionally a polyol (**PO**) different from polyether polyol (**PEP**), provided that the molar ratio between the sum of hydroxyl groups deriving from polyether polyol (**PEP**) of an unbranched C2-C4 polyalkylene glycol and from optional polyol (**PO**), and the sum of isocyanate groups deriving from multifunctional isocyanate (**I**) is between 0.9 and 1.1; and
- optionally, adding (further) reactive diluent (**RD**).

Another preferred method for obtaining a polyether-functional urethane (meth)acrylate (**A**) comprises the steps of
- providing an unbranched C2-C4 polyalkylene glycol (meth)acrylate (**AGA**), optionally a hydroxyalkyl (meth)acrylate (**HAA**), and further optionally a polyol (**PO**) different from polyether polyol (**PEP**), optionally in the presence of a reactive diluent (**RD**) which is chemically inert towards isocyanate;
- adding a multifunctional isocyanate (**I**) thereto, wherein the molar ratio between the sum of isocyanate groups deriving from multifunctional isocyanate (**I**) to the sum of hydroxyl groups deriving from unbranched C2-C4 polyalkylene glycol (meth)acrylate (**AGA**), from hydroxyalkyl (meth)acrylate (**HAA**) and from optional polyol (**PO**), is between 0.9 and 1.1; and
- optionally, adding (further) reactive diluent (**RD**).

A further preferred method for obtaining a polyether-functional urethane (meth)acrylate (**A**) may comprise the steps of
- providing a multifunctional isocyanate (**I**) and a polyether polyol (**PEP**) of an unbranched C2-C4 polyalkylene glycol, optionally in the presence of a reactive diluent (**RD**) which is chemically inert towards isocyanate, wherein the molar ratio between the sum of isocyanate groups deriving from multifunctional isocyanate (**I**) to the sum of hydroxyl groups deriving from polyether polyol (**PEP**) of an unbranched C2-C4 polyalkylene glycol, is between 1.001 and 2.5;
- adding an unbranched C2-C4 polyalkylene glycol (meth)acrylate (**AGA**) and optionally a polyol (**PO**) different from polyether polyol (**PEP**) thereto, provided that the molar ratio between the sum of hydroxyl groups deriving from polyether polyol (**PEP**) of an unbranched C2-C4 polyalkylene glycol, from unbranched C2-C4 polyalkylene glycol (meth)acrylate (**AGA**) and from optional polyol (**PO**), and the sum of isocyanate groups deriving from multifunctional isocyanate (**I**) is between 0.9 and 1.1; and
- optionally, adding (further) reactive diluent (**RD**).

Independently from the method used to obtain a polyether-functional urethane (meth)acrylate (**A**), process catalysts generally known to increase the reactivity of the reaction between isocyanate groups and hydroxyl-groups may preferably be used in any of the steps. Such process catalysts most preferably are metal catalysts like e.g. zinc alkoxylates, bismuth alkoxylates, zirconium alkoxylates or mixtures thereof. Commercial examples include Valikat^{®} ZB8 (from Umicore), Valikat^{®} Bi 2010 (from Umicore) or Borchers^{®} Deca Zirconium 15 (from Borchers).

The thermo-curable resin composition (**X**) may further comprise at least one unsaturated resin different from polyether-functional urethane (meth)acrylate (**A**). Preferably, the oligomeric ethylenically unsaturated resin (**UR**) comprised in the thermo-curable resin composition (**X**) comprises at least 15, preferably at least 30, more preferably at least 45 % weight, based on the total weight of the oligomeric ethylenically unsaturated resin (**UR**), of at least one polyether-functional urethane (meth)acrylate (**A**), and up to 85, preferably up to 70, more preferably up to 55 % weight, based on the total weight of the oligomeric ethylenically unsaturated resin (**UR**), of at least one unsaturated resin different from polyether-functional urethane (meth)acrylate (**A**). The at least one unsaturated resin different from polyether-functional urethane (meth)acrylate (**A**) may be selected from the group consisting of unsaturated polyester resins, vinyl ester resins, urethan(meth)acrylates, epoxy(meth)acrylates, polyester(meth)acrylates and mixtures thereof.

The thermo-curable resin composition (**X**) may be cured by adding at least one radical initiator (**RI**) thereto. In cases where a radical initiator (**RI**) with a low reactivity is used and where a high curing temperature is targeted, the at least one radical initiator (**RI**) can be comprised in the thermo-curable resin composition (**X**). Preferably, the at least one radical initiator (**RI**) is added to the thermo-curable resin composition (**X**) just before the composition is applied and cured. Preferably, the % weight of the at least one radical initiator (**RI**) comprised in or added to the thermo-curable resin composition (**X**) is from 0,05 % to 10 %, more preferably from 0,2 % to 4 % and most preferably from 0,5 % to 2,5 % compared to the total weight of the thermo-curable resin composition (**X**).

The radical initiator (**RI**) may be a thermal initiator which is an azo compound such as, for example, azo isobutyronitrile (AIBN), 1,1'-azobis(cyclohexanenitrile), 1,1'-azobis(2,4,4-trimethylpentane), C-C labile compounds, such as benzopinacole, peroxides, and mixtures thereof.

More preferably, the radical initiator (**RI**) may be a thermal initiator which is a peroxide. Peroxide includes organic and inorganic peroxides. In an embodiment, the thermal initiator is soluble in the composition. Examples of peroxides include for example, percarbonates (of the formula -OC(O)O-), peroxyesters (of the formula -C(O)OO-), diacylperoxides, also known as peranhydride (of the formula -C(O)OOC(O)-), dialkylperoxides or perethers (of the formula -OO-), hydroperoxides (of the formula -OOH), etc. The peroxides may also be oligomeric or polymeric in nature.

The thermal initiator may for example comprise a percarbonate, a perester or a peranhydride. Peranhydrides are for example benzoylperoxide (BPO) and lauroyl peroxide (commercially available as Laurox^{™}). Peresters are for instance t-butyl per benzoate and 2-ethylhexyl perlaurate. Percarbonates are for example di-t-butylpercarbonate and di-2-ethylhexylpercarbonate or monopercarbonates.

Even more preferably, the thermal initiator is an organic peroxide. Examples of organic peroxides are: tertiary alkyl hydroperoxides (such as, for instance, t-butyl hydroperoxide), other hydroperoxides (such as, for instance, cumene hydroperoxide), a ketone peroxide (perketones, being an addition product of hydrogen peroxide and a ketone, such as, for instance, methyl ethyl ketone peroxide, methyl isobutylketone peroxide and acetylacetone peroxide), peroxyesters or peracids (such as, for instance, t-butyl peresters, benzoyl peroxide, peracetates and perbenzoates, lauroyl peroxide, including (di)peroxyesters, perethers (such as, for instance, peroxy diethyl ether).

Most preferably, the radical initiator (**RI**) is selected from the group consisting of: Methyl ethyl ketone peroxide, methyl isobutylketone peroxide, cumyl hydroxperoxide, benzoyl peroxides, 1,1-bis(t-butylperoxy) cyclohexane, o,o-tertiary-butyl-o-isopropyl monoperoxycarbonate, 2,5-dimethyl-2,5-di(-2ethylhexanoylperoxy)hexane,1,1-di(t-butylperoxy)-3,3,5-trimethylcyclohexane, 2,2-di(t-butylperoxy)butane, 1-cyano-1(t-butylazo) cyclohexane and any combinations thereof.

The thermo-curable resin composition (**X**) may further comprises a cure accelerator (**CA**), preferably selected from the group consisting of metal-organic compounds, nitrogen-containing compounds and mixtures thereof.

Suitable nitrogen-containing compounds may be selected from the group of alkyl anilines, more preferably the nitrogen-containing compounds are selected from the group consisting of N,N-dimethylaniline (DMA), N,N-diethylaniline (DEA), N,N-dimethyl-para-toluidine (DMpT), N,N-diisopropyl-para-toluidine (DiPpT), N,N-dihydroxyethyl -para-toluidine (DHEpT), ethoxylated dihydroxyethyl -para-toluidine and mixtures thereof. Suitable metal-organic compounds may be selected from the group consisting of carboxylates of transition metals. More preferably, the metal comprised in the metal-organic compound is selected from the group consisting of cobalt, manganese, cupper and iron.

Preferably, the % weight of cure accelerator (**CA**) comprised in the thermo-curable resin composition (**X**) is from 0,05 % to 10 %, more preferably from 0,2 % to 4 % and most preferably from 0,5 % to 2,5 % compared to the total weight of the thermo-curable resin composition (**X**).

In case the thermo-curable resin composition (**X**) comprises as cure accelerator (**CA**) a metal-organic compound the % weight of metal preferably is from 0.0005 to 0.5 %, more preferably from 0.001 to 0.4 %, most preferably from 0.001 to 0.2 %, based on the total composition.

Alternatively the thermo-curable resin composition (**X**) may be cured by means of actinic radiation, particularly by means of ultraviolet radiation or electron beam.

In some embodiments, the thermo-curable resin composition (**X**) may comprise inhibitors. Examples of suitable inhibitors include but are not limited to phenolic inhibitors such as hydroquinone (HQ), methyl hydroquinone (THQ), 4-tert-Butylcatechol (TBC), benzoquinone (BQ), tert-butyl hydroquinone (TBHQ), di-tert-butyl hydroquinone (DTBHQ), hydroquinone monomethyl ether (MEHQ), 2,6-di-tert-butyl-4-methylphenol (BHT), phenothiazine (PTZ) and the like. When present, inhibitors are preferably present in an amount up to 0.5wt%, in particular from 0.0001 to 0.2 wt%, and preferably from 0.01 to 0.1 wt% of the composition.

Another embodiment of the present invention was to provide a thermo-curable resin composition (**X**) that cures tack-free. Preferably, the thermo-curable resin composition (**X**) is tack-free after curing at 100°C in 25 min or less, preferably in less than 15 min, most preferably in less than 10 min, after between 0.003 and 0.01 phr (parts by hundred parts resin) cobalt metal in the form of a carboxylate and 1.0 phr (parts by hundred parts resin) methyl isobutyl ketone peroxide is added to the composition and whereby a layer of 500 µm of the composition is applied.

Tack-free, within the content of the present invention, means that no tackiness can be detected when the surface of the applied composition is touched with the cleaned fingertip.

Within the content of the present invention phr (parts by hundred parts resin) means the parts by weight of the entity it relates to added to 100 parts of thermo-curable resin composition (**X**).

Any feature of the first aspect can be as correspondingly described in any of the other aspects.

The second aspect of the present invention relates to a coating composition (**Z**) comprising the thermo-curable resin composition (**X**).

The coating composition (**Z**) may additionally comprise one or more of pigments, fillers, thixotropes, secondary driers, dispersants, antisettling agents, sag control agents, light or UV stabilisers, flow modifiers, levelling agents, defoamers, wetting agents, surfactants, adhesion promoting agents, flame retardants, slip additives, anti-stain additives, and anti-graffiti additives.

The coating composition (**Z**) may particularly be used as gel coat for molded, preferably fiber-reinforced articles, like e.g. swimming pools, boats, windmill blades, window sills and car body parts. Molded articles comprising the gel coat can be prepared by conventional processes. For example, a gel coat composition may be spread across the surface of a mold by any one of a number of conventional techniques, e.g., brushing, or spraying, and usually as a relatively thick layer to maximize its weather and wear resistance, and if the molded article is fiber-reinforced, to help mask the fiber reinforcement pattern which can appear through the gel coat due to inherent resin shrinkage that occurs around the fibers during cure. Preferably, the layer thickness of the cured gel coat is in the range between 100 and 2,000 µm, more preferably between 200 and 1,000 µm and most preferably between 250 and 750 µm. After the gel coat is applied to the surface of the mold, it is at least partially cured. A plastic, optionally fiber-reinforced, then is applied to the partially or fully cured gel coat by any one of a number of conventional techniques, and the resulting laminate structure containing gel coat and substrate are cured. Advantageously, the gel coat cures on the substrate at a temperature of less than 40°C. For some applications and particularly if a high cure speed is desired, curing of the gel coat at elevated temperatures, preferably between 40 and 140 °C, more preferably between 60 and 130 °C, most preferably between 80 and 120 °C may be advantageous.

Any feature of the second aspect can be as correspondingly described in any of the other aspects.

The third aspect of the present invention relates to a method for obtaining a tack-free cured coating layer. The method comprises the steps of
i. adding to the coating composition (**Z**) a free-radical initiator (**RI**) selected from the group consisting of peroxides, azo-compounds and mixtures thereof,
ii. applying the coating composition from step (i) onto a substrate to form a wet film, and
iii. optionally, applying a temperature of between 40 and 140 °C, preferably between 6 and 130 °C, most preferably between 80 and 120 °C, for up to 240 minutes, preferably up to 120 minutes, more preferably up to 60 minutes, most preferably between 1.0 and 240 minutes, between 1.0 and 120 minutes, between 1.0 and 60 minutes.

If step iii. is not applied, the tack-free cured coating layer can be obtained by curing at room temperature.

Any feature of the third aspect can be as correspondingly described in any of the other aspects.

The fourth aspect of the present invention relates to the use of the thermo-curable resin composition (**X**) to obtain a tack-free cured coating layer after adding a free-radical initiator (**RI**) selected from the group consisting of peroxides, azo-compounds and mixtures thereof.

Any feature of the fourth aspect can be as correspondingly described in any of the other aspects.

The fifth aspect of the present invention relates to an article of manufacture comprising a tack-free cured coating layer on its surface, prepared by curing a coating composition (**Z**).

Any feature of the fifth aspect can be as correspondingly described in any of the other aspects.

### EXAMPLES

The following raw materials were used in the Examples:
HEA 2-hydroxyethylacrylate
IPDI isophorone diisocyanate
BHT 2,6-Di-*tert*-butyl-4-methylphenol
BISOMER^{®} PEA6 (polyethylene glycol monoacrylate comprising 6 ethylene oxide (EO) units) obtained from GEO Specialty Chemicals
Polytetramethylene glycol 650 (weight average molecular weight of 650 g/mol) obtained from BASF
Polytetramethylene glycol 1000 (weight average molecular weight of 1000 g/mol) obtained from BASF
Poly(1,3-propylene glycol) 1000 (Velvetol^{®} H 1000, weight average molecular weight of 1000 g/mol) obtained from WeylChem International
Poly(1,2-propylene glycol) 1000 (VORANOL^{™} 1010 L, weight average molecular weight of 1000 g/mol) obtained from Dow
Polyethylene glycol 1000 (weight average molecular weight of 1000 g/mol) obtained from Sigma Aldrich
Polycaprolactone diol 1250 (Capa^{®} 2125, weight average molecular weight of 1250 g/mol) obtained from Ingevity
EBECRYL^{®} 117 (hydroxy-functional mono-acrylate, hydroxyl value 160 mg KOH/g) obtained from allnex
Tetraethylene glycol diacrylate obtained from Sigma Aldrich
EOEOA (diethylene glycol monoethylether acrylate) obtained from BASF
Accelerator NL51-PN (solution of 6% cobalt in solvent mixture) obtained from Nouryon
Accelerator N553S (solution of 1.9% cobalt in solvent mixture) obtained from Nouryon
CUROX^{®} i300 (methyl isobutyl ketone peroxide, 50 % weight) obtained from United Initiators
HDDA hexanediol diacrylate
EBECRYL^{®} 284 (87 % difunctional urethane acrylate diluted in 13 % HDDA) obtained from allnex
EBECRYL^{®} 4680 (80 % tetrafunctional urethane acrylate diluted in 20 % HDDA) obtained from allnex
EBECRYL^{®} 4820 (65 % trifunctional urethane acrylate diluted in 35 % HDDA) obtained from allnex
Valikat^{®} ZB8 (metal catalyst) obtained from Umicore
Borchers^{®} Deca Zirconium 15 (metal catalyst) obtained from Borchers
FP 9151 white pigment paste based on unsaturated polyester resin containing 60 % weight of TiO₂
(EBECRYL^{®} 284, EBECRYL^{®} 4680 and EBECRYL^{®} 4820 are resin composition comprising urethane acrylates not according to the invention)

The following test methods have been used in the examples:
- Room temperature (23°C, 50 % relative humidity) dryability: A free-radical initiator (**RI**), e.g. CUROX^{®} i300, was added to the resin compositions in amounts given in the tables below. The time at which the initiator was added was taken as the start time. The sample was then applied onto a glass plate strip at a wet film thickness of 500 µm as determined by a Elcometer Wet film Thickness Gauge. The glass plate strip was then put on a drying recorder (BK 3 Drying recorder from Neurtek) and periodically the film was tested with the clean finger. The time at which the film felt tacky, but no wet gelcoat adhered to the finger was taken as the "backup time". The time at which the needle of the drying recorder was no longer penetrating the film and the scratch of the needle disappeared corresponds to the "final drying time".
- High temperature dryability : A free-radical initiator (**RI**), e.g. CUROX^{®} i300, was added to the resin compositions in amounts given in the tables below. The sample was then applied at a wet film thickness of 500 µm onto a glass plate as determined by a Elcometer Wet film Thickness Gauge. The glass plate was then put in an ventilated oven at 80 or 100 °C, respectively. The time at which the glass plate entered the oven was taken as the start time. Periodically the film was tested with the clean finger. The time at which the film felt tacky but no wet gelcoat adhered to the finger was taken as the "backup time". Testing was continued with the finger until the film ceased to be tacky to the touch and this time was taken as the "tack free time".
- 20 g of the sample of the dryability test were poured into a glass tube with a diameter of 25 mm equipped with a thermocouple and the time between the addition of the free-radical initiator (**RI**) and the peak temperature recorded was monitored ("Time to peak temperature").
- The dynamic viscosity of the coating compositions were measured at a fixed shear rate with a cone and plate type rheometer MCR100 (Paar-Physica) according to DIN EN ISO 3219, 25 1/s; 23° C.
- Abrasion resistance: After the backup time the gel coat was backed up with fiber reinforced polyester laminate. 2 layers of glass mat (30 g/m²) saturated with pre-accelerated laminating resin VIAPAL^{®} VUP 4714BET/52 (available from allnex), were applied by hand layup on the backside of the gel coat. The laminate resin was cured with 2 phr of Curox i300 initiator and allowed to cure at 80°C for 5 min. After curing, the laminated gelcoat was removed from the glass substrate. The abrasion resistance of the gelcoat layer was tested using a Taber^{®} 5750 linear abrasion tester. A commercial gel coat sample was tested as a reference. The gel coates were exposed to 25 returns with different abrasive Wearaser (CS-8: mild abrading action, CS-10: medium abrading action, CS-19: severe abrading action) and coatings were then visually assessed. The stroke speed was 25 cycles/min and the stroke length was 25 mm. The total weight was respectively 350 g or 500 g (as indicated in the table).
- Odor: The odor of the resin composition was evaluated by means of placing the resin composition at a distance of 10 cm from the nose: "O" indicates the absence of a detectable odor, "△" indicates presence of a mild odor while "S" indicates the presence of a strong odor.
- NCO content, acid value and OH-value were measured according to methods well known in the art.

### EXAMPLE 1

142.3 g IPDI, 0.11 g BHT and 0.26 g Valikat^{®} ZB8 were placed into a reaction flask equipped with an agitator, liquid addition funnel and thermometer. The reaction mixture was heated to 45 °C. Next, 74.3 g HEA was added over 60 minutes such that the exothermic reaction was maintained below 70 °C. The reaction was continued at 60°C until the NCO content was 12.4 %. Then 310.1 g of Poly(1,3-propylene glycol) 1000 was added over 30 minutes. After the addition was completed the reaction mixture was maintained at 70 °C until the residual NCO content was lower than 0.2% and after which the reaction was terminated.

### Example 2

142.3 g IPDI, 0.11 g BHT and 0.26 g Valikat^{®} ZB8 were placed into a reaction flask equipped with an agitator, liquid addition funnel and thermometer. The reaction mixture was heated to 45 °C. Next, 74.3 g HEA was added over 60 minutes such that the exothermic reaction was maintained below 70 °C. The reaction was continued at 60 °C until the NCO content was 12.4 %. Then 303.2 g of Polytetramethylene glycol 1000 was added over 30 minutes. After the addition was completed the reaction mixture was maintained at 70 °C until the residual NCO content was lower than 0.2% and after which the reaction was terminated.

### Example 3

142.3 g IPDI , 0.11 g BHT and 0.26 g Valikat^{®} ZB8 were placed into a reaction flask equipped with an agitator, liquid addition funnel and thermometer. The reaction mixture was heated to 45 °C. Next, 74.3 g HEA was added over 60 minutes such that the exothermic reaction was maintained below 70 °C. The reaction was continued at 60 °C until the NCO content was 12.4 %. Then 303.2 g of Polyethylene glycol 1000 was added over 30 minutes. After the addition was completed the reaction mixture was maintained at 70 °C until the residual NCO content was lower than 0.2 % and after which the reaction was terminated.

### Example 4

2318.4 g BISOMER^{®} PEA6 , 0.31 g BHT and 0.293 g Valikat^{®} ZB8 were placed into a reaction flask equipped with an agitator, liquid addition funnel and thermometer. The reaction mixture was heated to 45 °C. Next, 766.9 g IPDI was added over 30 minutes such that the exothermic reaction was maintained below 70 °C. After the addition was completed the reaction mixture was maintained at 70°C until the residual NCO content was lower than 0.2% and after which the reaction was terminated.

### Example 5

483 g IPDI together with 717 g polytetramethylene glycol 650 were placed into a reaction flask equipped with an agitator, liquid addition funnel and thermometer. The reaction mixture was heated to 55 °C and 0.68 g Borchers^{®} Deca Zirconium 15 was added to the mixture. After the exothermic reaction was finished, the reaction was continued at 70 °C until the NCO content was 7.6 %. Subsequently 0.58 g of Valikat^{®} ZB8 was added to the reactor, followed by 717.1g of BISOMER^{®} PEA6 fed through an addition funnel over 120 min time period. After the addition was completed the reaction mixture was maintained at 70 °C until the residual NCO content was lower than 0.2% and after which the reaction was terminated.

### Comparative Example 1

142.3g IPDI, 0.1 g BHT and 0.26 g Valikat^{®} ZB8 were placed into a reaction flask equipped with an agitator, liquid addition funnel and thermometer. The reaction mixture was heated to 45°C. Next, 74.3 g HEA was added over 60 minutes such that the exothermic reaction was maintained below 70 °C. The reaction was continued at 60°C until the NCO content was 12.4 %. Then 307.3 g of Poly(1,2-propylene glycol) 1000 was added over 30 minutes. After the addition was completed the reaction mixture was maintained at 70 °C until the residual NCO content was lower than 0.2% and after which the reaction was terminated.

### Comparative Example 2

112.5 g IPDI, 0.1 g BHT and 0.24 g Valikat^{®} ZB8 were placed into a reaction flask equipped with an agitator, liquid addition funnel and thermometer. The reaction mixture was heated to 45 °C. Next, 58.8 g HEA was added over 60 minutes such that the exothermic reaction was maintained below 70 °C. The reaction was continued at 60 °C until the NCO content was 12.4 %. Then 309.8 g of Polycaprolactone diol 1250 was added over 30 minutes. After the addition was completed the reaction mixture was maintained at 70 °C until the residual NCO content was lower than 0.2% and after which the reaction was terminated.

### Comparative Example 3

152.8 g EBECRYL^{®} 117, 0.1 g BHT and 0.06 g Valikat^{®} ZB8 were placed into a reaction flask equipped with an agitator, liquid addition funnel and thermometer. The reaction mixture was heated to 45 °C. Next, 48.2 g IPDI was added over 60 minutes such that the exothermic reaction was maintained below 70 °C. After the addition was completed the reaction mixture is maintained at 70 °C until the residual NCO content was lower than 0.2% and after which the reaction was terminated.

### Comparative Example 4

A 3 liter reactor equipped with a stirrer and a column is charged with 298.3 g 2-methyl-1,3-propanediol, 190.6 g of isophthalic acid, 169.9 g phthalic anhydride, 70.6 g maleic anhydride, 0.22 g toluhydroquinone and 0.3 g of a tin catalyst. The mass was heated to 160 °C under atmospheric pressure and nitrogen flow. When the partial acid value was in the same range of the total acid value, the mass was heated to 220 °C. When no water distilled anymore, vacuum was applied. The reaction mixture was heated until the acid value was lower than 10 mg KOH/g. The reaction mixture was then cooled down to 90 °C and 1306 g of tetraethylenglycol diacrylate was added under stirring until a homogeneous clear product was obtained.

### Preparation of the coating compositions and test results

The materials were added in the sequence of the lines in the table. These coating compositions were then tested as described above. **Comp 1 to 19** refer to coating compositions according to the invention, **CC 1 to 12** refer to comparative compositions not according to the invention. From the test results as presented in **Table 1** it can be clearly seen that these coating compostions show good room temperature dryability. In contrast, the test results as presented in **Table 2** show that the comparative coating compositions (not according to the invention) could not be dried within 24 hours at room temperature.

**Table 1**

| | **Comp 1** | **Comp 2** | **Comp 3** | **Comp 4** | **Comp 5** | **Comp 6** | **Comp 7** | **Comp 8** | **Comp 9** |
|---|---|---|---|---|---|---|---|---|---|
| Resin from Example 1 (g) | 45 | | | | | 60 | | | |
| Resin from Example 2 (g) | | 45 | | | | | 60 | | |
| Resin from Example 3 (g) | | | 45 | | | | | | |
| Resin from Example 4 (g) | | | | 70 | | | | 80 | |
| Resin from Example 5 (g) | | | | | 50 | | | | 65 |
| Tetraethylene glycol diacrylate (g) | 55 | 55 | 55 | 30 | 50 | | | | |
| EOEOA (g) | | | | | | 40 | 40 | 20 | 35 |
| Accelerator NL51-PN (g) | 0.75 | 0.75 | 0.75 | 0.75 | 0.75 | 0.75 | 0.75 | 0.75 | 0.75 |
| CUROX^{®} i300 (g) | 2 | 2 | 2 | 2 | 2 | 2 | 2 | 2 | 2 |
| % weight of unbranched moiety acc. to formula 1* | 27 | 27 | 27 | 50 | 31 | 36 | 36 | 58 | 40 |
| dynamic viscosity (mPa.s) | 666 | 828 | 440 | 472 | 1042 | 630 | 903 | 460 | 461 |
| Time to peak temperature (minutes) | 10 | 11 | 24 | 19 | 12 | 31 | 33 | 21 | 23 |
| Peak temperature (°C) | 168 | 174 | 111 | 169 | 143 | 121 | 134 | 125 | 82 |
| "backup time" (hours) | 5 | 8 | 11 | 5 | 4.5 | 5 | 5 | 3.5 | 3 |
| "final drying time" (hours) | 7 | 9 | 12 | 7 | 6 | 6.5 | 7 | 5.5 | 4.5 |

| | | | | | | | | | |
|---|---|---|---|---|---|---|---|---|---|
| * % weight of unbranched moiety according to formula 1 deriving from unbranched C2-C4 polyalkylene glycol (meth)acrylate (AGA) and/or from polyether polyol (PEP) based on the total weight of the thermo-curable resin composition | | | | | | | | | |

**Table 2**

| | **CC 1** | **CC 2** | **CC 3** | **CC 4** | **CC5** | **CC 6** |
|---|---|---|---|---|---|---|
| Resin from Comparative Example 1 (g) | 45 | | | 60 | | |
| Resin from Comparative Example 2 (g) | | 45 | | | 60 | |
| Resin from Comparative Example 3 (g) | | | 80 | | | |
| Resin from Comparative Example 4 (g) | | | | | | 60 |
| Tetraethylene glycol diacrylate (g) | 55 | 55 | | | | 40 |
| EOEOA (g) | | | 20 | 40 | 40 | |
| Accelerator NL51-PN (g) | 0.75 | 0.75 | 0.75 | 0.75 | 0.75 | 0.75 |
| CUROX^{®} i300 (g) | 2 | 2 | 2 | 2 | 2 | 2 |
| % weight of unbranched moiety acc. to formula 1* | 0 | 0 | 0 | 0 | 0 | 0 |
| dynamic viscosity (mPa.s) | 395 | 734 | 660 | 380 | 809 | 482 |
| Time to peak temperature (minutes) | 24 | 90 | 70 | 60 | 180 | 47 |
| Peak temperature (°C) | 195 | 153 | 127 | 120 | 110 | 195 |
| "backup time" (hours) | >24 | >24 | >24 | >24 | >24 | >24 |
| "final drying time" (hours) | >24 | >24 | >24 | >24 | >24 | >24 |

| | | | | | | |
|---|---|---|---|---|---|---|
| * % weight of unbranched moiety according to formula 1 deriving from unbranched C2-C4 polyalkylene glycol (meth)acrylate (AGA) and/or from polyether polyol (PEP) based on the total weight of the thermo-curable resin composition | | | | | | |

From the test results as presented in **Tables 3 and 4** it can be clearly seen that the coating compostions **Comp 10 to 16** show good high temperature dryability, whereas the comparative coating compositions **CC 7 to 10** (not according to the invention) could not even be dried within 60 min at 100 °C. Comparative coating composition **CC 11** showed acceptable high temperature dryability, however, the coating composition had a strong odor due to the high content of styrene.

**Table 3**

| | **Comp 10** | **Comp 11** | **Comp 12** | **Comp 13** | **Comp 14** |
|---|---|---|---|---|---|
| EBECRYL^{®} 284 (g) | | 40 | | | 30 |
| EBECRYL^{®} 4680 (g) | | | 40 | | |
| EBECRYL^{®} 4820 (g) | | | | 55 | |
| Resin from Example 4 (g) | 80 | 30 | 30 | 30 | |
| Resin from Example 2 (g) | | | | | 30 |
| HDDA (g) | 20 | 30 | 30 | 15 | 40 |
| Accelerator NL51-PN (g) | | | | | 0.15 |
| Accelerator N553S (g) | 0.2 | 0.2 | 0.2 | 0.2 | |
| CUROX^{®} i300 (g) | 2 | 2 | 2 | 2 | 2 |
| dynamic viscosity (mPa.s) | 853 | 853 | 853 | 853 | 785 |
| % weight of unbranched moiety acc. to formula 1* | 58 | 22 | 22 | 22 | 15 |

| | High temperature dryability at 80 °C | | | | |
|---|---|---|---|---|---|
| "backup time" (min) | 10 | 12 | 10 | not tested | not tested |
| "tack free time" (min) | 15 | 15 | 15 | not tested | not tested |

| | High temperature dryability at 100 °C | | | | |
|---|---|---|---|---|---|
| "backup time" (min) | 4 | 5 | 5 | 15 | 5 |
| "tack free time" (min) | 8 | 10 | 10 | 20 | 8 |

| | | | | | |
|---|---|---|---|---|---|
| * % weight of unbranched moiety according to formula 1 deriving from unbranched C2-C4 polyalkylene glycol (meth)acrylate (AGA) and/or from polyether polyol (PEP) based on the total weight of the thermo-curable resin composition | | | | | |

**Table 4**

| | **CC 7** | **CC 8** | **CC 9** | **Comp 15** | **Comp 16** | **CC 10** | **CC 11** |
|---|---|---|---|---|---|---|---|
| EBECRYL^{®} 284 (g) | 62 | | | | | | |
| EBECRYL^{®} 4680 (g) | | 60 | | | | | |
| EBECRYL^{®} 4820 (g) | | | 80 | | | | |
| Resin from Example 4 (g) | | | | 30 | 30 | | |
| Unsaturated polyester** (g) | | | | 35 | 35 | 51 | 64 |
| HDDA (g) | 38 | 40 | 20 | 37 | 35 | 49 | |
| Styrene (g) | | | | | 5 | | 36 |
| Accelerator NL51-PN (g) | | | | | | | |
| Accelerator N553S (g) | 0.2 | 0.2 | 0.2 | 0.2 | 0.2 | 0.2 | 0.2 |
| CUROX^{®} i300 (g) | 2 | 2 | 2 | 2 | 2 | 2 | 2 |
| dynamic viscosity (mPa.s) | 700 | 380 | 789 | 1200 | 794 | 1356 | 861 |
| % weight of unbranched moiety acc. to formula 1* | 0 | 0 | 0 | 22 | 21 | 0 | 0 |
| Odor | ○ | ○ | ○ | ○ | △ | ○ | S |

| | High temperature dryability at 80 °C | | | | | | |
|---|---|---|---|---|---|---|---|
| "backup time" (min) | > 60 | > 60 | > 60 | 10 | 15 | > 60 | 20 |
| "tack free time" (min) | > 60 | > 60 | > 60 | 15 | 20 | > 60 | 30 |

| | High temperature dryability at 100 °C | | | | | | |
|---|---|---|---|---|---|---|---|
| "backup time" (min) | > 60 | > 60 | > 60 | 6 | 5 | > 60 | 15 |
| "tack free time" (min) | > 60 | > 60 | > 60 | 10 | 10 | > 60 | 20 |

| | | | | | | | |
|---|---|---|---|---|---|---|---|
| * % weight of unbranched moiety according to formula 1 deriving from unbranched C2-C4 polyalkylene glycol (meth)acrylate (AGA) and/or from polyether polyol (PEP)based on the total weight of the thermo-curable resin composition ** 100 % solids unsaturated polyester based on 3-methyl-1,5-pentanediol, isophthalic acid, phthalic acid, maleic anhydride, OH-value: 50 mgKOH/g, acid value: 10 mgKOH/g | | | | | | | |

From the test results as presented in **Table 5** it can be clearly seen that the coating compositions **Comp 17 to 19** show good high temperature dryability, whereas the comparative coating composition **CC 12** (not according to the invention) could not even be dried within 60 min at 100 °C.

**Table 5**

| | **Comp 17** | **Comp 18** | **Comp 19** | **CC 12** |
|---|---|---|---|---|
| EBECRYL^{®} 284 (g) | 40 | 47 | 53 | 60 |
| Resin from Example 4 (g) | 30 | 20 | 10 | |
| HDDA (g) | 30 | 33 | 37 | 40 |
| FP 9151 white pigment paste (g) | 15 | 15 | 15 | 15 |
| Tinuvin^{®} 400** (g) | 0.5 | 0.5 | 0.5 | 0.5 |
| Tinuvin^{®} 292** (g) | 0.5 | 0.5 | 0.5 | 0.5 |
| Accelerator NL51-PN (g) | 0.15 | 0.15 | 0.15 | 0.15 |
| CUROX^{®} i300 (g) | 2 | 2 | 2 | 2 |
| dynamic viscosity (mPa.s) | 1190 | 1145 | 1095 | 1010 |
| % weight of unbranched moiety acc. to formula 1* | 22 | 15 | 7 | 0 |

| | High temperature dryability at 100 °C | | | |
|---|---|---|---|---|
| "backup time" (min) | 5 | 10 | 20 | > 60 |
| "tack free time" (min) | 10 | 15 | 25 | > 60 |

| | | | | |
|---|---|---|---|---|
| * % weight of unbranched moiety according to formula 1 deriving from unbranched C2-C4 polyalkylene glycol (meth)acrylate (AGA) and/or from polyether polyol (PEP) based on the total weight of the thermo-curable resin composition ** light stabilizer (from BASF) | | | | |

From the test results as presented in **Table 6** it can be clearly seen that the coating compositions **Comp 2 to 4** show better abrasion resistance than a commercial gel coat sample.

**Table 6**

| | **Comp 2** | **Comp 3** | **Comp 4** | **Commercial Gel coat** |
|---|---|---|---|---|
| CS-8 - 25 cycles (350 g load) | not tested | not tested | **** | **** |
| CS-10 - 25 cycles (350 g load) | **** | **** | *** | ** |
| CS-19 - 25 cycles (350 g load) | **** | **** | *** | not tested |
| CS-19 - 25 cycles (500 g load) | *** | *** | ** | not tested |

| | | | | |
|---|---|---|---|---|
| **** : no visible damage (best) *** : few scratches ** : lot of scratches * : matt surface (worst) | | | | |

## Claims

1. A thermo-curable resin composition (**X**) comprising an oligomeric ethylenically unsaturated resin (**UR**) and at least one reactive diluent (**RD**),
wherein the oligomeric ethylenically unsaturated resin (**UR**) comprises at least one polyether-functional urethane (meth)acrylate (**A**) obtainable from the reaction of a mixture comprising:
(a) a multifunctional isocyanate (**I**);
(b) a hydroxyalkyl (meth)acrylate (**HAA**), and/or an unbranched C2-C4 polyalkylene glycol (meth)acrylate (**AGA**);
(c) optionally, a polyol having a weight average molecular weight of 200 to 4000 g/mol, wherein the polyol is a polyether polyol (**PEP**) of an unbranched C2-C4 polyalkylene glycol; and
(d) optionally, a polyol (**PO**) different from (c);
wherein the reactive diluent (**RD**) comprises a monomer (**B**) having at least one (meth)acrylate group,
and wherein the at least one polyether-functional urethane (meth)acrylate (**A**) comprises at least one unbranched moiety according to formula 1, 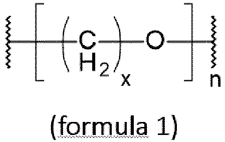
wherein x is an integer from 2 to 4, preferably from 2 to 3, n is an integer from 2 to 90, preferably from 2 to 50, most preferably from 3 to 30, and wherein the at least one unbranched moiety according to formula 1 derives from (b) and/or (c).

2. The thermo-curable resin composition (**X**) according to claim 1, wherein the mixture comprises
(a) from 10 to 45, more preferably from 12 to 40, most preferably from 15 to 35 % weight of the multifunctional isocyanate (**I**);
(b-1) from 5 to 40, more preferably from 8 to 35, most preferably from 10 to 30 % weight of the hydroxyalkyl (meth)acrylate (**HAA**),
(c) from 25 to 80, more preferably from 30 to 75, most preferably from 35 to 70 % weight of the polyol having a weight average molecular weight of 200 to 4000 g/mol, wherein the polyol is a polyether polyol (**PEP**) of an unbranched C2-C4 polyalkylene glycol; and
(d) optionally, from 1 to 35, more preferably from 1 to 30, most preferably from 1 to 25 % weight of a polyol (**PO**) different from (c);
wherein the sum of **I, HAA, PEP** and (optional) **PO** is 100 %;

3. The thermo-curable resin composition (**X**) according to claim 1, wherein the mixture comprises
(a) from 10 to 50, more preferably from 12 to 40, most preferably from 15 to 35 % weight of the multifunctional isocyanate (**I**); and
(b-2) from 40 to 90, more preferably from 45 to 85, most preferably from 50 to 80 % weight of the unbranched C2-C4 polyalkylene glycol (meth)acrylate (**AGA**);
wherein the sum of **I** and **AGA** is 100 %.

4. The thermo-curable resin composition (**X**) according to anyone of claims 1 to 3, wherein the % weight of oligomeric ethylenically unsaturated resin (**UR**) is from 30 to 90, preferably from 45 to 80, and wherein the % weight of reactive diluent (**RD**) is from 10 to 70, preferably form 20 to 55, based on the total weight of the thermo-curable resin composition (**X**); wherein the sum of **UR** and **RD** is 100 %.

5. The thermo-curable resin composition (**X**) according to anyone of claims 1 to 4, wherein the weight ratio of oligomeric ethylenically unsaturated resin (**UR**) and reactive diluent (**RD**) is from 0.25 to 20.00, preferably from 0.40 to 10.00 and most preferably from 0.75 to 4.00.

6. The thermo-curable resin composition (**X**) according to anyone of claims 1 to 5, wherein the % weight of monomer (**B**) having at least one (meth)acrylate group, comprised in reactive diluent (**RD**) is more than 75, preferably more than 85 and most preferably more than 95.

7. The thermo-curable resin composition (**X**) according to anyone of claims 1 to 6, wherein the reactive diluent (**RD**) comprises more than 25.0 % weight of a monomer (**M2**) having at least two (meth)acrylate groups.

8. The thermo-curable resin composition (**X**) according to anyone of claims 1 to 7, wherein the oligomeric ethylenically unsaturated resin (**UR**) comprises at least 15, preferably at least 30, more preferably at least 45 % weight, based on the total weight of the oligomeric ethylenically unsaturated resin (**UR**), of at least one polyether-functional urethane (meth)acrylate (**A**), and up to 85, preferably up to 70, more preferably up to 55 % weight, based on the total weight of the oligomeric ethylenically unsaturated resin (**UR**), of at least one unsaturated resin different from polyether-functional urethane (meth)acrylate (**A**), preferably selected from the group consisting of unsaturated polyester resins, vinyl ester resins, urethan(meth)acrylates, epoxy(meth)acrylates, polyester(meth)acrylates and mixtures thereof.

9. The thermo-curable resin composition (**X**) according to anyone of claims 1 to 8, wherein the % weight of unbranched moiety according to formula 1 deriving from unbranched C2-C4 polyalkylene glycol (meth)acrylate (**AGA**) and/or from polyether polyol (**PEP**) is from 5 to 70 %, more preferably from 10 to 60 % based on the total weight of the thermo-curable resin composition (**X**).

10. The thermo-curable resin composition (**X**) according to anyone of claims 1 to 9, wherein the composition is tack-free after curing at 100°C in 25 min or less, preferably in less than 15 min, most preferably in less than 10 min,
after between 0.003 and 0.01 phr cobalt metal in the form of a carboxylate and 1.0 phr methyl isobutyl ketone peroxide is added to the composition and whereby a layer of 500 µm of the composition is applied.

11. The thermo-curable resin composition (**X**) according to anyone of claims 1 to 10, wherein the composition further comprises a cure accelerator (**CA**), preferably selected from the group consisting of metal-organic compounds, nitrogen-containing compounds and mixtures thereof.

12. The thermo-curable resin composition (**X**) according to claim 11, wherein a metal-organic compound is present, and wherein the metal comprised in the metal-organic compound is preferably selected from the group consisting of cobalt, manganese, cupper and iron.

13. The thermo-curable resin composition (**X**) according to claim 12, wherein the % weight of metal is from 0.0005 to 0.5 %, based on the total composition.

14. The thermo-curable resin composition (**X**) according to anyone of claims 1 to 13, wherein the composition is substantially free of styrene, methyl styrene, ethyl styrene, halogenated styrene, vinyl toluene and methylmethacrylate.

15. A coating composition (**Z**) comprising the thermo-curable resin composition (**X**) according to anyone of claims 1 to 14.

16. The coating composition (**Z**) according to claim 15, wherein the coating composition (**Z**) additionally comprises one or more of pigments, fillers, thixotropes, secondary driers, dispersants, antisettling agents, sag control agents, light or UV stabilisers, flow modifiers, levelling agents, defoamers, wetting agents, surfactants, adhesion promoting agents, flame retardants, slip additives, anti-stain additives, and anti-graffiti additives.

17. Method for obtaining a tack-free cured coating layer comprising the steps of
i. adding to a coating composition (**Z**) according to anyone of claims 15 or 16 a free-radical initiator (**RI**) selected from the group consisting of peroxides, azo-compounds and mixtures thereof,
ii. applying the coating composition from step (i) onto a substrate to form a wet film, and
iii. optionally, applying a temperature of between 40 and 140 °C, preferably between 60 and 130 °C, most preferably between 80 and 120 °C, for up to 240 minutes, preferably up to 120 minutes, more preferably up to 60 minutes.

18. Use of thermo-curable resin composition (**X**) according to anyone of claims 1 to 14 to obtain a tack-free cured coating layer after adding a free-radical initiator (**RI**) selected from the group consisting of peroxides, azo-compounds and mixtures thereof.

19. An article of manufacture comprising a tack-free cured coating layer on its surface, prepared by curing a coating composition (**Z**) according to anyone of claims 15 and 16 by a method according to claim 17.
